# EUROPÄISCHE PATENTSCHRIFT

(11) **EP 0 821 399 B1**
(45) Veröffentlichungstag und Bekanntmachung des Hinweises auf die Patenterteilung: **17.09.2003**
(21) Anmeldenummer: 97111272.7
(22) Anmeldetag: 04.07.1997
(51) Int. Cl.: H01K 1/18

(54) **Einseitig verschlossene elektrische Glühlampe**
Electric incandescent lamp closed at one end
Lampe électrique à incandescence fermée à une extrémité

(30) Priorität: 24.07.1996 DE 29612757 U
(43) Veröffentlichungstag der Anmeldung: 28.01.1998
(73) Patentinhaber: Patent-Treuhand-Gesellschaft für elektrische Glühlampen mbH, 81543 München (DE)
(72) Erfinder: Stark, Roland, 91809 Wellheim (DE)

(56) Entgegenhaltungen:
- EP-A- 0 143 917
- EP-A- 0 173 995
- EP-A- 0 446 459
- EP-A- 0 446 460
- EP-A- 0 616 359
- FR-A- 2 200 619
- US-A- 3 696 265

## Beschreibung

Die Erfindung betrifft eine einseitig verschlossene Glühlampe, insbesondere eine Halogenglühlampe gemäß dem Oberbegriff des Anspruchs 1.

Sie geht aus von der in der EP 0 446 460 A (DE OS 40 08 367) offenbarten Lampe. Diese Art von Lampen wird beispielsweise für die Allgemeinbeleuchtung eingesetzt. Sie eignet sich für den direkten Betrieb mit Netzspannung, typisch zwischen ca. 80V und 250V (Effektivwert). Üblicherweise werden elektrische Leistungen im Bereich zwischen ca. 10 W und 500 W verwendet.

Der für derartige Lampen verwendete Leuchtkörper muß einen im Vergleich zu Niedervoltlampen (typisch 12 V) relativ hohen Widerstand R und folglich eine große Länge ℓ besitzen. Dies ist unmittelbar aus der Beziehung für die ohmsche Leistung P=U²/R=U²·A/(ρ·ℓ)ersichtlich, die von einem Draht der Länge ℓ, der Querschnittsfläche A und dem spezifischen Widerstand p=R · A/ℓ umgesetzt wird, wenn an seinen Enden eine Spannung U anliegt. Dieser Beziehung zu Folge muß die Länge ℓ des Drahtes überproportional größer gewählt werden, je höher die für den Betrieb vorgesehene Spannung U ist - vorausgesetzt die geplante Leistungsaufnahme P der Lampe sowie die übrigen Parameter sollen unverändert bleiben.

Um den erforderlichen langen Leuchtkörper innerhalb eines möglichst kompakten Lampenkolbens unterzubringen, ist der Leuchtkörper in zwei leuchtende Schenkel gebogen und weist insgesamt eine V- oder U-ähnliche Gestalt auf. Zwischen den beiden Schenkeln erstreckt sich ein Verbindungsteil, welches durch eine aus dem Kolbenmaterial gebildete stegähnliche Verengung fixiert ist.

Soll die Lampe erhöhter Stoßbelastung ausgesetzt werden, so sind besondere Maßnahmen erforderlich, um zu verhindern, daß sich die Schenkel bei Stoßbelastung berühren können. Während der Berührung ist nämlich nur ein Teil des Leuchtkörpers vom Lampenstrom durchflossen. Der Rest des Leuchtkörpers ist über die Berührungsstelle kurzgeschlossen. Nach der obigen ohmschen Beziehung führt eine Verkürzung der effektiv wirksamen Länge des Leuchtkörpers - und folglich einer Verkleinerung des Widerstandes - aber zu einer entsprechenden Zunahme der umgesetzten elektrischen Leistung. Dadurch besteht die Gefahr der thermischen Überlastung und schließlich der Zerstörung des Leuchtkörpers.

Um dies zu vermeiden, sind in der EP 0 446 460 A (DE-OS 40 08 367) die Schenkel je nach Länge gegebenenfalls in mehrere Teilschenkel untergliedert, wobei die Teilschenkel wiederum durch Stege fixiert sind.

In der EP 0 446 459 A (DE-OS 40 08 334) wird hingegen vorgeschlagen zwischen beide Schenkel einen aus dem Kolbenmaterial gebildeten Steg als Trennelement anzubringen.

Nachteilig bei der ersten Lösung ist, daß, um eine hohe Betriebssicherheit auch bei starken Stoßbelastungen zu gewährleisten, eine Vielzahl von Stegen erforderlich ist. Aufgrund der notwendigen zusätzlichen Arbeitsschritte wird die Fertigung dieser Lampe aufwendig und damit teuer. Bei der zweiten Lösung besteht, insbesondere bei kleineren Kolben mit relativ kurzen Wendelschenkeln, aus Platzgründen die Schwierigkeit, einen zusätzlichen Steg im Bereich zwischen den Schenkeln anzubringen. Dieser Umstand begrenzt zwangsläufig die mögliche Kompaktheit solcher Lampen.

Der Erfindung liegt die Aufgabe zugrunde, diese Nachteile zu beseitigen und eine Glühlampe anzugeben, bei der mit einfachen Mitteln eine gegenseitige Berührung der Wendelschenkel verhindert wird.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Der Grundgedanke der Erfindung beruht darauf, in den Kolben zwischen den Wendelschenkeln mindestens einen Prallkörper einzubringen, der an mindestens einer Verengung des Lampenkolbens befestigt und im wesentlichen in Richtung der Lampenlängsachse orientiert ist. Bei einer Stoßbelastung der Lampe derart, daß sich die beiden Wendelschenkel aufeinander zu bewegen, werden die Wendelschenkel gegebenenfalls durch den oder die Prallkörper abgebremst. Dadurch wird zum einen einer besonders starken Auslenkung und möglichen Zerstörung der Wendelschenkel durch Resonanzeffekte entgegengewirkt. Zum anderen wird eine unmittelbare gegenseitige Berührung der Wendelschenkel verhindert.

Unter einem Prallkörper soll dabei ein im allgemeinen räumliches Gebilde verstanden werden, welches bevorzugt eine im wesentlichen lineare Ausdehnung aufweist. Zur Vergrößerung der "Prallfläche" kann es auch vorteilhaft sein, einen Prallkörper mit flächiger Struktur zu verwenden.

Für die Herstellung des Prallkörpers sind hitzebeständige Materialien hoher Steifigkeit, beispielsweise Keramiken, wie z.B. Al₂O₃, oder hochschmelzende Metalle, wie z.B. Wolfram geeignet. Einerseits kann dadurch der Prallkörper in räumlicher Nähe zu den leuchtenden Wendelschenkeln angebracht und folglich eine kompakte Bauform realisiert werden. Andererseits ist gewährleistet, daß der Prallkörper seinerseits nicht selbst zu merklichen transversalen Schwingungen angeregt wird.

Werden Metalle verwendet, so sind mindestens zwei gegeneinander elektrisch isolierte Prallkörper erforderlich, nämlich für jeden Wendelschenkel mindestens einen. Auf diese Weise wird ein elektrischer Kurzschluß auch für den Fall zuverlässig verhindert, daß sich beide Wendelschenkel gleichzeitig in Richtung Kolbenmitte bewegen und die entsprechenden Prallkörper zum selben Zeitpunkt berühren. Im Gegensatz dazu wäre bei nur einem einzigen metallischen Prallkörper und gleichzeitiger Berührung durch beide Wendelschenkel ein Teil der Wendel durch den elektrisch leitenden Prallkörper kurzgeschlossen.

Bei Verwendung eines elektrisch isolierenden Materials ist hingegen im Prinzip bereits ein einziger Prallkörper ausreichend.

Im einfachsten Fall ist der Prallkörper als länglicher Körper ausgebildet, beispielsweise als Stift, Stab oder Rohr. Sein Querschnitt kann beliebig geformt sein, beispielsweise kreisförmig, oval, rechteckig, ringförmig usw. Der Querschnitt muß nicht notwendigerweise über die gesamte Länge des Prallkörpers konstant sein. Abgestimmt auf den Querschnitt sind einerseits die geometrischen Abmessungen, insbesondere Durchmesser und Länge so zu dimensionieren, daß eine ausreichend hohe Steifigkeit sichergestellt ist. Andererseits soll der Lichtstrom der Wendel möglichst wenig abgeschattet und außerdem der Halogenkreislauf nicht beeinträchtigt werden. Aus dieser Sicht sind möglichst schlank geformte Prallkörper günstig.

In einer ersten einfachen Ausführungsform besteht der Prallkörper aus einem Rundstab. Er ist aus Wolfram gefertigt und weist einen Durchmesser im Bereich zwischen ca. 200 µm und 600 µm auf. Vorteilhaft erstreckt sich der Prallkörper mindestens über die halbe - bevorzugt über die gesamte - Länge des Leuchtkörpers, so daß die maximale Auslenkung der Leuchtkörperschenkel wirkungsvoll begrenzt werden kann. Prallkörper und Wendelschenkel sind im einfachsten Fall in einer gemeinsamen Ebene angeordnet. Schwingen die Wendelschenkel innerhalb dieser gemeinsamen Referenzebene, so wird ein gegenseitiges Berühren mit Sicherheit verhindert.

Bilden die Schwingungsebenen der Wendelschenkel hingegen einen Winkel α zur Referenzebene, der größer als ein Mindestwinkel αₘᵢₙ ist, so schwingen die Wendelschenkel unter Umständen an den länglichen Prallkörpern vorbei und können sich im ungünstigsten Fall berühren. Dieser Winkel αₘᵢₙ ist um so größer, je größer die Durchmesser von Wendelschenkeln und Prallkörper sind und - für den Fall, daß jedem Wendelschenkel ein eigener Prallkörper zugeordnet ist - je näher jeweils Wendelschenkel und Prallkörper zueinander angeordnet sind. Mit zunehmendem Winkel αₘᵢₙ werden allerdings auch die für eine Berührung erforderlichen Auslenkungen der Wendelschenkel größer und damit eine tatsächliche Berührung immer unwahrscheinlicher. Ursache ist die - im elastischen Bereich der Wendelschenkel - mindestens proportional zur Auslenkung zunehmende erforderliche Stoßkraft.

In einer Ausführung, die auch bei extremen Stoßbelastungen eine gegenseitige Berührung der Wendelschenkel verhindert, sind die Wendelschenkel und die länglichen Prallkörper gegeneinander verdreht angeordnet. Dadurch wird der effektive "Stoßquerschnitt" zwischen Wendelschenkel und Prallkörper und folglich der Winkel αₘᵢₙ - auch bei Verwendung überwiegend linearer Formen für die Prallkörper- vergrößert. In der Praxis sind Verdrehwinkel von wenigen Grad in der Regel ausreichend.

In einer konkreten Ausführungsform ist dies durch ein Verdrehen der Wendelschenkel aus der ursprünglich mit den Prallkörpern gemeinsamen Ebene heraus realisiert. In einer ersten Variante sind die Wendelschenkel nicht wie allgemein üblich in einer gemeinsamen Ebene angeordnet, sondern gezielt gegeneinander verdreht. In einer erweiterten Variante sind schließlich sowohl beide Wendelschenkel als auch die Prallkörper räumlich gegeneinander verdreht angeordnet. Auf diese Weise werden alle in der Praxis auftretenden und möglicherweise zu einer Kollision führenden Bewegungen der Wendelschenkel durch die Prallkörper rechtzeitig blockiert.

In einer weiteren Ausführungsform, die ebenfalls selbst bei extremen Stoßbelastungen eine Berührung der Wendelschenkel verhindert, sind die länglichen Prallkörper aus der Referenzebene heraus gebogen, bevorzugt im wesentlichen senkrecht dazu. Dabei spielt die tatsächliche Form nur eine untergeordnete Rolle. Wichtig ist nur, daß durch den gebogenen Prallkörper gegenüber einem im wesentlichen linearen Prallkörper die Wirkung einer deutlich vergrößerten "Prallfläche" erzielt wird. Dies läßt sich beispielsweise mit Hilfe eines winkelförmig gebogenen Stabes erreichen. Als Kompromiß kann es auch ausreichend sein, einem im wesentlichen linearen Prallkörper einen ausgeprägt ovalen Querschnitt zu geben - beispielsweise durch Abplatten eines Rundstabes - und die Breitseite senkrecht zur Referenzebene anzuordnen.

Bei besonders kompakten Lampen, die nur einen Steg zur Halterung der beiden Wendelschenkel im Bereich ihres Verbindungsteils aufweisen, sind die Prallkörper jeweils nur an ihrem einen Ende durch eine Verengung des Kolbens mechanisch gehalten, z.B. durch Klemmung und/oder Formschluß. Während der Herstellung der Lampe werden die Prallkörper gemeinsam mit der Wendel innerhalb des Kolbens positioniert. Dazu wird eine Gabel verwendet, welche die Wendel trägt und zusätzlich Öffnungen zur Aufnahme der Prallkörper aufweist. Werden beispielsweise zwei Rundstäbe aus Wolfram verwendet, ist die Gabel mit zwei entsprechenden Bohrungen zu versehen. Auf diese Weise sind nur wenige gut automatisierbare Schritte erforderlich, so daß eine kostengünstige Herstellung möglich ist. Bei Ausführungen mit unterteilten Wendelschenkeln können die Prallkörper auch an beiden Enden durch je eine Verengung gehaltert werden.

Die aus dem Kolbenmaterial gebildete stegartige Verengung ist bevorzugt aus zwei einander diametral gegenüber stehenden rohrartigen und trichterförmigen Vertiefungen ausgeführt und können einen kreisförmigen oder auch länglich ovalen Querschnitt aufweisen. Das zugrunde liegende Prinzip ist in der EP 0 446 460 A (DE-OS 40 08 367) und der EP 0 446 459 A (DE-OS 40 08 334) ausführlich beschrieben.

Für Allgemeinbeleuchtungszwecke kann die Lampe mit einem Außenkolben umgeben und wahlweise mit Stift- oder Schraubsockel bestückt werden.

Die Erfindung wird im folgenden anhand einiger Ausführungsbeispiele näher erläutert. Es zeigen
- Fig. 1a: ein erstes Ausführungsbeispiel einer erfindungsgemäßen Halogenglühlampe in Seitenansicht, wobei Leuchtkörper und Prallkörper in einer gemeinsamen Ebene angeordnet sind,
- Fig. 1b: wie Fig. 1a, aber mit bezüglich der Längsachse der Lampe um 90° gedrehter Blickrichtung A,
- Fig. 2a: ein zweites Ausführungsbeispiel einer erfindungsgemäßen Halogenglühlampe in Seitenansicht, wobei die Leuchtkörper gegeneinander verkippt sind,
- Fig. 2b: wie Fig. 2a, aber mit bezüglich der Längsachse der Lampe um 90° gedrehter Blickrichtung B,
- Fig. 3a: den Querschnitt entlang einer Linie AB eines länglichen Prallkörpers,
- Fig. 3b: die Seitenansicht des länglichen Prallkörpers aus Figur 3a,
- Fig. 4a: den Querschnitt entlang einer Linie CD eines in einer Ebenen gebogenen länglichen Prallkörpers,
- Fig. 4b: die Seitensicht des gebogenen Prallkörpers aus Figur 4a.

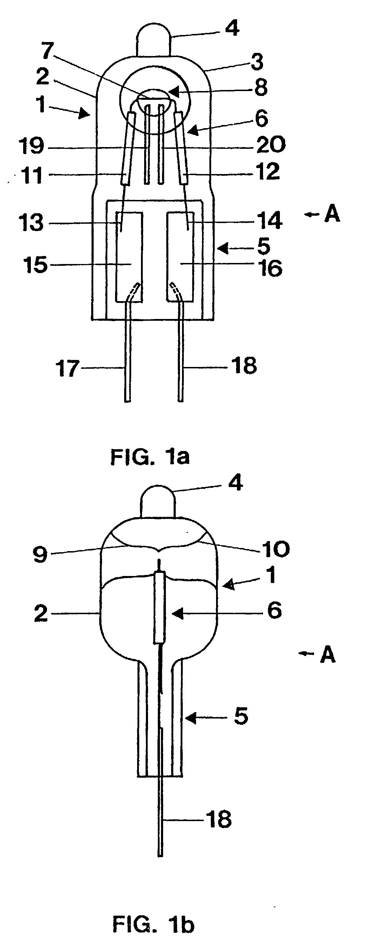

Die Figuren 1a und 1b zeigen eine erfindungsgemäße Halogenglühlampe 1 für Allgemeinbeleuchtungszwecke mit einer Leistung von 75 W, die für den direkten Anschluß an das 240 V-Netz geeignet ist. Die Halogenglühlampe 1 besitzt einen im wesentlichen kreiszylindrischen Kolben 2 aus Quarzglas mit einem Außendurchmesser von etwa 12mm bei einer Wandstärke von ca. 1 mm und einer Gesamtlänge von ungefähr 32 mm. Das eine Ende des Kolbens 2 ist zu einer Kuppe 3 geformt, die mittig eine Pumpspitze 4 aufweist. Das andere Ende des Kolbens 2 ist mit einer Quetschdichtung 5 verschlossen: Der Kolben 2 ist mit einer Inertgasmischung aus 80% Kr und 20% N₂ gefüllt, der ein Halogenzusatz aus 0,005% CBrClF₂ beigefügt ist.

Ein U-förmig gebogener Leuchtkörper 6 ist innerhalb des Kolbens 2 angeordnet. Das Verbindungsteil 7 der beiden Schenkel des U's ist in der Nähe der Kuppe 3 mittels einer Verengung 8 befestigt. Die Verengung 8 ist aus zwei trichterartigen Vertiefungen 9,10 der Kolbenwand gebildeten, wie in der DE-OS 40 08 367 ausführlich beschrieben. Die beiden Vertiefungen 9,10 sind einander diametral gegenüberstehend und senkrecht zur Ebene der Quetschdichtung 5 angeordnet und erstrecken sich jeweils nahezu bis zur Lampenlängsachse, wo sie das Verbindungsteil 7 klemmend haltern. Die beiden geraden Schenkel des U's bilden die eigentlich leuchtenden, etwa 8,5 mm langen Wendelarme 11,12, die sich vom Verbindungsteil 7 bis zur Quetschdichtung 5 erstrecken. Während die beiden Wendelschenkel 11,12 doppelt gewendelt sind, ist das Verbindungsteil 7 ungewendelt. Die beiden Wendelschenkel 11,12 gehen an ihren quetschdichtungsseitigen Enden in kurze ungewendelte Abschnitte über, die als Stromzuführungen 13,14 fungieren. Die Stromzuführungen 13,14 sind in die Quetschdichtung 5 derart eingeschmolzen, daß die Wendelschenkel 11,12 im Kolben gespannt sind. Mittels zweier Dichtungsfolien 15,16 ist in an sich bekannter Weise eine gasdichte elektrische Verbindung zwischen den Stromzuführungen 13,14 und zwei zugehörigen Kontaktstiften 17,18 der Lampe 1 hergestellt.

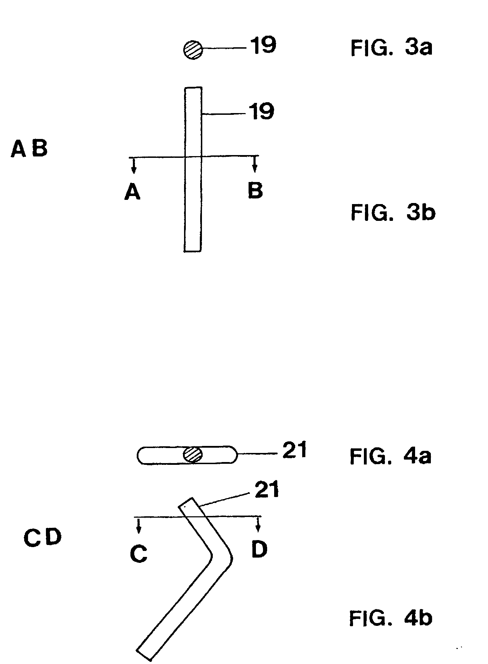

Zwei als Prallkörper fungierende Stifte 19,20 mit kreisförmigem Querschnitt (siehe auch Figuren 3a,b) sind parallel zueinander und zur Kolbenlängsachse zwischen den beiden Wendelschenkel 11,12 angeordnet. Die Stifte 19,20 sind an ihrem pumpspitzenseitigen Ende in der Verengung 8 derart eingeklemmt, daß sie mit den Wendelschenkel 11,12 zusammen in einer gemeinsamen Ebene liegen. Dies ist in Figur 1b gut erkennbar, welche die gegenüber Figur 1a um 90° gedrehte Seitenansicht A der Lampe 1 - d.h. mit Blickrichtung in der genannten Ebene - zeigt. Die Stifte 19,20 bestehen aus Wolfram und erstrecken sich bis zum quetschdichtungsseitigen Ende der Wendelschenkel 11,12. Der Durchmesser der Stifte beträgt ca. 0,35 mm.

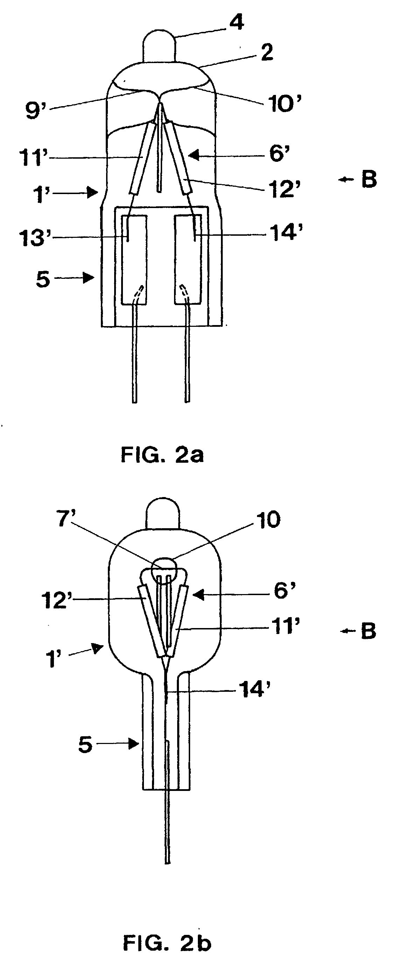

Die Figuren 2a und 2b zeigen zwei gegeneinander um 90° gedrehte Seitenansichten einer zweiten Ausführungsform 1' einer erfindungsgemäßen Halogenglühlampe. Im Unterschied zur Halogenglühlampe 1 aus Figur 1a,b sind in dieser Variante 1' die trichterartigen Vertiefungen 9',10' gezielt in der Ebene der Quetschdichtung 5 angeordnet, d.h. gegenüber der Anordnung bei der Lampe 1 um 90° bezüglich der Kolbenlängsachse verdreht. Durch diese Maßnahme wird erreicht, daß das Verbindungsteil 7' in einer Ebene senkrecht zur Ebene der Quetschdichtung 5 orientiert ist. Folglich dreht sich der Leuchtkörper 6', von einer Stromzuführung 14' beginnend aus der Ebene der Quetschdichtung 5 über den folgenden Wendelschenkel 12' heraus, über den Verbindungsteil 7' in die zur Ebene der Quetschdichtung 5 senkrechten . Ebene hinein und anschließend über den zweiten Wendelschenkel 11' und die nachfolgende Stromzuführung 13' wieder in die Ebene der Quetschdichtung 5 zurück. Dadurch sind die beiden Wendelschenkel 11',12' sowohl zueinander als auch bezüglich der als Prallkörper dienenden Wolframstifte 19,20 räumlich schief angeordnet.

In den Figuren 3a,b ist eine Ausführungsbeispiel für einen länglichen Prallkörper 19 in Querschnittsansicht entlang einer Linie AB sowie in Seitenansicht dargestellt. Dabei handelt es sich um einen der beiden in den Figuren 1 und 2 verwendeten Wolframstiften mit kreisförmigem Querschnitt.

Die Figuren 4a,b zeigen ein weiteres Ausführungsbeispiels eines Prallkörpers 21 in Querschnittsansicht entlang einer Linie CD bzw. in Seitenansicht. Der Prallkörper 21 besteht aus einem Wolframstift mit kreisförmigem Querschnitt, der in einer Ebenen winkelartig gebogen ist. Für die Verwendung als Prallkörper ist vorgesehen, den Winkel 21 mit seinem einen Ende - ähnlich wie die Stifte in den Figuren 1 und 2- zwischen zwei Vertiefungen 9,10; 9'10' des Lampenkolbens klemmend zu haltern. Durch die winkelartige Form ist eine gegenüber Figur 3 vergrößerte effektive "Prallfläche" für die Wendelschenkel realisiert.

## Patentansprüche

1. Einseitig verschlossene elektrische Glühlampe, insbesondere Halogenglühlampe (1; 1') für den Betrieb an Netzspannung, mit
- einem hermetisch abgedichteten Kolben (2) aus lichtdurchlässigem Material, der eine Längsachse definiert,
- einer Füllung aus Inertgas und eventuell einem halogenhaltigen Zusatz,
- einem Leuchtkörper (6; 6') mit zwei Schenkeln (11,12; 11',12') und einem Verbindungsteil (7; 7') sowie ggf. Zwischenteilen, welche die Schenkel in Teilschenkel untergliedern,
- mindestens einer Verengung (8), die aus mindestens zwei Vertiefungen (9,10; 9',10') der Kolbenwand gebildet ist und den Leuchtkörper (6; 6') am Verbindungsteil (7; 7') und ggf. den Zwischenteilen haltert,
- einem Stromzuführungssystem (13-18; 13',14',15-18), das mit den beiden Schenkelenden des Leuchtkörpers (6; 6') elektrisch leitend verbunden ist,
**dadurch gekennzeichnet, daß** der Kolben (2) in seinem Innern mindestens einen Prallkörper (19; 20) aus hitzebeständigem Material aufweist, der von mindestens einer Verengung (8) gehaltert ist und sich im wesentlichen in Richtung der Längsachse zwischen den beiden Schenkeln (11,12; 11',12') des Leuchtkörpers (6; 6') bzw. ggf. sich zwischen je zwei gegenüberliegenden Teilschenkeln erstreckt und bei Stoßbelastung der lampe die Schenkeln abbremst.

2. Glühlampe nach Anspruch 1, **dadurch gekennzeichnet, daß** der Prallkörper (19; 20) eine im wesentlichen lineare Form aufweist.

3. Glühlampe nach Anspruch 2, **dadurch gekennzeichnet, daß** der Prallkörper durch einen stabförmigen Stift (19; 20) gebildet ist.

4. Glühlampe nach Anspruch 3, **dadurch gekennzeichnet, daß** der Stift (19; 20) einen im wesentlichen kreisförmigen Querschnitt aufweist.

5. Glühlampe nach Anspruch 3, **dadurch gekennzeichnet, daß** der Stift mindestens über einen Teilbereich einen ausgeprägt ovalen Querschnitt aufweist, wobei der Stift bezüglich seiner Längsachse so orientiert ist, daß seine größere Lateralabmessung im wesentlichen senkrecht zur Verbindungslinie der beiden Schenkel des Leuchtkörpers ausgerichtet ist.

6. Glühlampe nach Anspruch 1, **dadurch gekennzeichnet, daß** die Lampe (1; 1') als Prallkörper zwei gegeneinander elektrisch isolierte hochschmelzende Metallstifte (19; 20) aufweist.

7. Glühlampe nach Anspruch 6, **dadurch gekennzeichnet, daß** die Metallstifte (19; 20) aus Wolfram bestehen.

8. Glühlampe nach Anspruch . 7, **dadurch gekennzeichnet, daß** der Durchmesser der Wolframstifte im Bereich zwischen ca. 200 µm und 600 µm liegt.

9. Glühlampe nach Anspruch 7, **dadurch gekennzeichnet, daß** die Wolframstifte (19; 20) und die Leuchtkörperschenkel (11; 12) ungefähr die gleiche Länge besitzen.

10. Glühlampe nach Anspruch 2, **dadurch gekennzeichnet, daß** die Schenkel (11; 12) des Leuchtkörpers (6) und die Prallkörper (19; 20) in einer gemeinsamen Referenzebene angeordnet sind.

11. Glühlampe nach Anspruch 2, **dadurch gekennzeichnet, daß** die Schenkel (11', 12') des Leuchtkörpers (6') und die Prallkörper in unterschiedlichen Ebenen angeordnet sind.

12. Glühlampe nach Anspruch 1, **dadurch gekennzeichnet, daß** die Schenkel (11', 12') des Leuchtkörpers (6') gegeneinander derart verkippt sind, daß sie nicht in einer gemeinsamen Ebene liegen.

13. Glühlampe nach den Ansprüchen 11 und 12, **dadurch gekennzeichnet, daß** das Stromzuführungssystem (13',14',15-18) mittels Quetschdichtung (5) hermetisch dicht mit dem Kolben (2) verbunden ist, wobei die Ebene der Quetschdichtung (5) und die Ebene, in der das Verbindungsteil (7') mittels der die Verengung bildenden Vertiefungen (9',10') gehaltert ist, senkrecht zu einander orientiert sind.

14. Glühlampe nach Anspruch 1, **dadurch gekennzeichnet, daß** der Prallkörper eine flächige Struktur (21) aufweist.

15. Glühlampe nach Anspruch 1, **dadurch gekennzeichnet, daß** der Kolben von einem Außenkolben mit Sockel umgeben ist.

## Claims

1. Electric incandescent lamp, closed at one end, in particular halogen incandescent lamp (1; 1') for mains voltage operation, having
- a hermetically sealed bulb (2) which is of a transparent material and defines a longitudinal axis,
- an inert gas filling, possibly also a halogen-containing additive,
- a luminous element (6; 6') having two limbs (11, 12; 11', 12') and a connecting part (7; 7') as well as, if necessary, intermediate parts dividing the limbs into sublimbs,
- at least one constriction (8), produced by at least two depressions (9, 10; 9', 10') in the bulb wall and holding the luminous element (6; 6') at the connecting part (7; 7') and, if necessary, the intermediate parts,
- a system of lead wires (13-18; 13', 14', 15-18) which is electrically conductively connected to the two ends of the limbs of the luminous element (6; 6'),
**characterized in that** the bulb (2) has, in its interior, at least one baffle element (19; 20) which is of heat-resistant material, is held by at least one constriction (8), extends essentially in the direction of the longitudinal axis between the two limbs (11, 12; 11', 12') of the luminous element (6; 6') or, if necessary, between in each case two opposite sublimbs, and brakes the limbs when the lamp is subjected to a shock load.

2. Incandescent lamp according to Claim 1, **characterized in that** the baffle element (19; 20) has an essentially linear form.

3. Incandescent lamp according to Claim 2, **characterized in that** the baffle element is in the form of a rod-like pin (19; 20).

4. Incandescent lamp according to Claim 3, **characterized in that** the pin (19; 20) has an essentially circular cross section.

5. Incandescent lamp according to Claim 3, **characterized in that** the pin has, at least over a subregion, a cross section which is distinctly oval, the pin being oriented with respect to its longitudinal axis such that its larger lateral dimension is aligned essentially perpendicular to the connecting line of the two limbs of the luminous element.

6. Incandescent lamp according to Claim 1, **characterized in that** the lamp (1; 1') has, as the baffle elements, two high-melting metal pins (19; 20) which are electrically isolated from one another.

7. Incandescent lamp according to Claim 6, **characterized in that** the metal pins (19; 20) are made of tungsten.

8. Incandescent lamp according to Claim 7, **characterized in that** the diameter of the tungsten pins is in the region of between about 200 µm and 600 µm.

9. Incandescent lamp according to Claim 7, **characterized in that** the tungsten pins (19; 20) and the luminous element limbs (11; 12) are of approximately equal length.

10. Incandescent lamp according to Claim 2, **characterized in that** the limbs (11; 12) of the luminous element (6) and the baffle elements (19; 20) are arranged in a common reference plane.

11. Incandescent lamp according to Claim 2, **characterized in that** the limbs (11', 12') of the luminous element (6') and the baffle elements are arranged in different planes.

12. Incandescent lamp according to Claim 1, **characterized in that** the limbs (11', 12') of the luminous element (6') are tilted relative to one another such that they do not lie in a common plane.

13. Incandescent lamp according to Claims 11 and 12, **characterized in that** the system of lead wires (13', 14', 15-18) is connected to the bulb (2) in a hermetically sealed manner by means of a pinch seal (5), the plane of the pinch seal (5) and the plane in which the connecting part (7') is held by means of the depressions (9', 10') forming the constriction being oriented perpendicular to one another.

14. Incandescent lamp according to Claim 1, **characterized in that** the baffle element has a flat structure (21).

15. Incandescent lamp according to Claim 1, **characterized in that** the bulb is surrounded by an outer bulb having a cap.

## Revendications

1. Lampe électrique à incandescence fermée d'un côté, notamment lampe (1 ; 1') à incandescence aux halogènes, destinée à être alimentée sur la tension du réseau, comprenant
- une ampoule (2) rendue hermétiquement étanche, en matière transparente à la lumière, qui définit un axe longitudinal,
- une atmosphère de gaz inerte et, le cas échéant, d'un additif halogéné,
- un corps (6 ; 6') lumineux ayant deux branches (11, 12 ; 11', 12') et une partie (7 ; 7') de liaison ainsi que, le cas échéant, des parties intermédiaires qui subdivisent les branches en sous-branches,
- au moins un rétrécissement (8) qui est formé d'au moins deux cavités (9, 10 ; 9', 10') de la paroi de l'ampoule et qui maintient le corps (6 ; 6') lumineux sur la partie (7 ; 7') de liaison et, le cas échéant, sur les parties intermédiaires,
- un système (13 à 18 ; 13', 14', 15 à 18) d'entrée de courant, qui est relié d'une manière conductrice de l'électricité aux deux extrémités de branche du corps (6 ; 6') lumineux,
**caractérisé en ce que** l'ampoule (2) a, à l'intérieur, au moins une pièce (19 ; 20) de rebondissement en matériau résistant à la chaleur, qui est maintenue par au moins un rétrécissement (8) et qui s'étend sensiblement dans la direction de l'axe longitudinal entre les deux branches (11, 12 ; 11', 12') du corps (6 ; 6') lumineux ou le cas échéant entre respectivement deux sous-branches opposées et qui, lorsque la lampe est soumise à un choc, freine les branches.

2. Lampe à incandescence suivant la revendication 1, **caractérisée en ce que** le corps (19 ; 20) de rebondissement a une forme sensiblement linéaire.

3. Lampe à incandescence suivant la revendication 2, **caractérisé en ce que** le corps de rebondissement est formé par une tige (19, 20) en forme de barreau.

4. Lampe à incandescence suivant la revendication 3, **caractérisée en ce que** la tige (19, 20) a une section transversale sensiblement circulaire.

5. Lampe à incandescence suivant la revendication 3, **caractérisée en ce que** la tige a au moins, sur une partie, une section transversale ovale marquée, l'axe longitudinal de la tige étant orienté de manière à ce que sa plus grande dimension latérale soit dirigée sensiblement perpendiculairement à la ligne de liaison des deux branches du corps lumineux.

6. Lampe à incandescence suivant la revendication 1, **caractérisée en ce que** la lampe (1 ; 1') a, en tant que pièce de rebondissement, deux tiges (19, 20) métalliques opposées isolées du point de vue électrique et à haut point de fusion.

7. Lampe à incandescence suivant la revendication 6, **caractérisée en ce que** les tiges (19 ; 20) métalliques sont en tungstène.

8. Lampe à incandescence suivant la revendication 7, **caractérisée en ce que** le diamètre des tiges en tungstène est compris entre environ 200 µm et 600 µm.

9. Lampe à incandescence suivant la revendication 7, **caractérisée en ce que** les tiges (19 ; 20) en tungstène et les branches (11 ; 12) du corps lumineux ont à peu prés la même longueur.

10. Lampe à incandescence suivant la revendication 2, **caractérisée en ce que** les branches (11 ; 12) du corps (6) lumineux et le corps (19 ; 20) de rebondissement sont disposés dans un plan commun de référence.

11. Lampe à incandescence suivant la revendication 2, **caractérisée en ce que** les branches (11', 12') du corps (6') lumineux et les corps de rebondissement sont disposés dans des plans différents.

12. Lampe à incandescence suivant la revendication 1, **caractérisée en ce que** les branches (11', 12') du corps (6') lumineux sont basculées l'une par rapport à l'autre de façon à ne pas être dans un plan commun.

13. Lampe à incandescence suivant les revendications 11 et 12, **caractérisée en ce que** le système (13', 14', 15 à 18) d'entrée de courant est relié d'une manière hermétiquement étanche à l'ampoule (2) au moyen de pincements (5), le plan du pincement (5) et le plan dans lequel la partie (7') de liaison est maintenue au moyen des cavités (9', 10') formant le rétrécissement, étant perpendiculaires entre eux.

14. Lampe à incandescence suivant la revendication 1, **caractérisé en ce que** le corps de rebondissement a une structure (21) plate.

15. Lampe à incandescence suivant la revendication 1, **caractérisé en ce que** l'ampoule est entourée d'une ampoule extérieure à culot.
